# EUROPÄISCHE PATENTANMELDUNG

(11) **EP 2 365 210 A1**
(43) Veröffentlichungstag der Anmeldung: **14.09.2011**
(21) Anmeldenummer: 10155996.1
(22) Anmeldetag: 09.03.2010
(51) Int. Cl.: F03B 3/02, F03B 3/18, F03B 15/08, H02K 7/18, H02K 21/22

(54) **Wasserturbine mit Regelungsvorrichtung und Generator zur Erzeugung von elektrischer Energie**

(71) Anmelder: Textilma AG, 6362 Stansstad (CH)
(72) Erfinder: Borer, Silvan, 5070 Frick (CH)
(74) Vertreter: Schmauder & Partner AG Patent- & Markenanwälte VSP

(57) **Zusammenfassung**

Um die Energie eines eher geringen, veränderlichen Wasserdurchflusses optimal ausnutzen zu können, wird eine Anlage vorgeschlagen, mit einer Turbine (1) mit verstellbaren Leitschaufeln (13), einem Generator (2) mit einem Rotor (11) und einem Stator (10) und einer Regelungseinrichtung (21). Dabei ist der Rotor (11) mit einer Vielzahl von Permanentmagneten (26),der Stator (10) mit einer Vielzahl von Generatorspulen aufweisenden Statorzähnen (27) ausgebildet. Die Zahl der Statorzähne (27) ist um 2 grösser oder kleiner ist als die Zahl der Permanentmagnete (26). Die Regelungseinrichtung (21) so eingerichtet ist, dass die Stellung der Leitschaufeln (13) und/oder die abzugebende elektrische Leistung in Abhängigkeit vom die abzugebende elektrische Leistung in Abhängigkeit vom Ausgangswasserdruck (25) und/oder von der Drehzahl des Rotors regelbar ist.

## Beschreibung

### Technisches Gebiet

Die Erfindung betrifft eine Anlage zur Erzeugung von elektrischer Energie aus einem veränderlichen Wasserdurchfluss und einem veränderlichen Wasserdruck gemäss dem Oberbegriff von Anspruch 1.

### Stand der Technik

Grundsätzlich ist es seit langem bekannt, insbesondere für Kleinwasserkraftwerke, Turbinen mit verstellbaren Leitschaufeln einzusetzen, die ein optimiertes Turbinenkonzept prinzipiell möglich machen. Solche Turbinen mit verstellbaren Leitschaufeln sind unter dem Namen Francis-Turbine wohlbekannt. Auch Francis Turbinen haben aber bei der Erzeugung von elektrischer Energie aus Wasserkraft grosse Schwierigkeiten, wenn die zu Verfügung stehende Wassermenge und der Druck nicht gleichmässig und konstant sind. Wie sich aus vielen Schriften, z.B. aus der EP 1 970 561 A1 ergibt, sind diverse Lösungsansätze, insbesondere mit Bypasskanälen versucht worden.

Die beschriebene Problematik tritt insbesondere auf bei dem Verbrauch von Nutzwasser, z.B. Trinkwasser. Da aber insbesondere bei Nutzwasser ein grosses Energiepotential besteht, erscheint es eine Aufgabe der Erfindung, die Turbine und damit die Energie möglichst über den gesamten Bereich variablen Verbrauchs nutzen zu können.

Bislang wird bei Kleinkraftwerken deswegen häufig eine Peltonturbine unter erhöhtem geregeltem Luftdruck in einem abgeschlossenen Gehäuse eingesetzt. Dabei wird die elektrische Leitung bei den unterschiedlich anfallenden Drehzahlen, mit einem Frequenzumformer an die Netzfrequenz angepasst. Auch muss bei diesem Verfahren, durch die Beimischung von Luft in das Trinkwasser, diese wieder aufwendig entlüftet werden. Weiterhin werden verkehrt laufende Kreiselpumpen verwendet, die aber nur mit einer bestimmten Wassermenge einen vernünftigen Wirkungsgrad besitzen.

Weiterhin ist es aus der WO 2008/049245 A1 grundsätzlich bekannt, insbesondere bei Kleinmotoren, Konzepte einzusetzen, bei denen der Antrieb einen bürstenlosen, als Aussenläufer ausgebildeten Gleichstrommotor mit einem Stator und einem Rotor umfasst und der Motor als Gleichstrommotor mit asymmetrischer Vielpolausführung ausgebildet ist.

### Darstellung der Erfindung

Aufgabe der Erfindung ist es, eine Anlage zur Gewinnung von Energie, nämlich elektrischer Energie aus einem veränderlichen Wasserdurchfluss und einem veränderlichen Wasserdruck zu verbessern.

Die Aufgabe der Erfindung wird durch eine Anlage nach Anspruch 1 gelöst. Dabei haben die Massnahmen der Erfindung zunächst einmal zur Folge, dass eine Anlage mit einer Turbine mit verstellbaren Leitschaufeln optimal mit einem - dazu passenden- Generator gekoppelt werden kann. Insbesondere kann durch die Massnahmen der Erfindung der Wirkungsgrad verbessert werden, ohne dass Stauanlagen eingebaut werden müssten. Das Lösungskonzept gemäss der vorliegenden Erfindung erlaubt eine Betriebsoptimierung und auch einen optimalen Fernbetrieb. Insbesondere wird durch die Lösung gemäss der vorliegenden Erfindung erreicht, dass die Netzeinspeisung auch unter schwankendem Wasserverbrauch optimal an die Netzfrequenz angepasst werden kann. Durch die viel weniger benötigten Maschinenteile, wie eine Kupplung zwischen Turbine und Generator, kann die gesamte Anlage viel günstiger hergestellt werden. Auch ist der benötigte Platz um einiges geringer als bei den bisher bekannten Lösungen und es werden keine zusätzlichen Gebäude benötigt.

Besonders vorteilhaft kann die Anlage ausgebildet werden, wenn die Turbine mit den verstellbaren Leitschaufeln und der Rotor des Generators auf einer gemeinsamen Welle angeordnet sind.

Grundsätzlich kann das Wasserdruckmanagement mechanisch durchgeführt werden. Vorteilhaft ist aber eine Ausführung mit einem Drucksensor zur Messung des Ausgangswasserdruckes der Turbine. Dann kann die Regeleinrichtung so eingerichtet sein, dass mittels eines Stellmotors, vorzugsweise eines Servomotor oder eines Schrittmotors, die Verstellung der Leitschaufeln oder die abzugebende elektrische Leistung so geregelt wird, dass der Ausgangswasserdruck am Drucksensor zumindest annähernd konstant gehalten zumindest aber begrenzt werden kann.

Weiterhin ist es grundsätzlich möglich, die elektrische Energie unabhängig von den Betriebsbedingungen in eine Gleichspannung umzuwandeln und diese danach mit einem Frequenzwandler an die Netzfrequenz anzupassen. Wenn es der Regelbereich z.B. in Bezug auf den Ausgangswasserdruck unmittelbar hinter der Turbine erlaubt, kann aber eine Regelung - mittels der verstellbaren Leitschaufeln - in Bezug auf die Drehfrequenz weiterhin dahingehend optimiert werden, dass die Zahl der Statorzähne und die Zahl der Permanentmagnete so ausgewählt sind, dass die Drehfrequenz der erzeugten elektrischen Energie am Stator um einen ganzzahligen Faktor höheren Wert einnimmt wie die Drehzahl des Generators.

Vorteilhaft ist es, wenn Ausgangswasserdruck mittels eines Drucksensors gemessen und die gemessenen Werte der Regelungselektronik zugeführt werden, damit der Ausgangswasserdruck als Regelgrösse - durch die abgegebene elektrische Leistung - im wesentlichen konstant gehalten zumindest aber begrenzt werden kann. Komplementär dazu wird vorteilhafterweise die Drehzahl des Rotors mittels der Stellung der Leitschaufeln konstant bzw. innerhalb eines nützlichen Bereichs im Kennfeld der Anlage gehalten.

Als weitere Regelhilfe, insbesondere beim Hochfahren und Herunterfahren der Anlage, kann ein Bremswiderstand zum Abführen des Turbinendrehmomentes vorgesehen werden.

Vorteilhaft erscheint es, wenn die Regelungseinrichtung so eingerichtet ist, dass die Stellung der Leitschaufeln in Abhängigkeit von der Drehzahl des Rotors und die abzugebende - also die ins Netz eingespeiste elektrische Leistung in Abhängigkeit vom Ausgangswasserdruck geregelt wird.

Die vorbenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können.

### Kurze Beschreibung der Zeichnungen

Weitere Einzelheiten, Vorteile und Merkmale des Gegenstandes der vorliegenden Erfindung ergeben sich aus der nachfolgenden Beschreibung der dazu gehörenden Zeichnungen, in denen - beispielhaft - eine erfindungsgemässe Anlage erläutert wird. In den Zeichnungen zeigt:
- Figur 1: eine Anlage von der Seite gemäss einem bevorzugten Ausführungsbeispiel der Erfindung;
- Figur 2: eine Ansicht gemäss Figur 1 im Schnitt A-A;
- Figur 3: eine Ansicht gemäss Figur 1 im Schnitt B-B;
- Figur 4: eine Ansicht gemäss Figur 1 im Schnitt C-C.

### Wege zur Ausführung der Erfindung

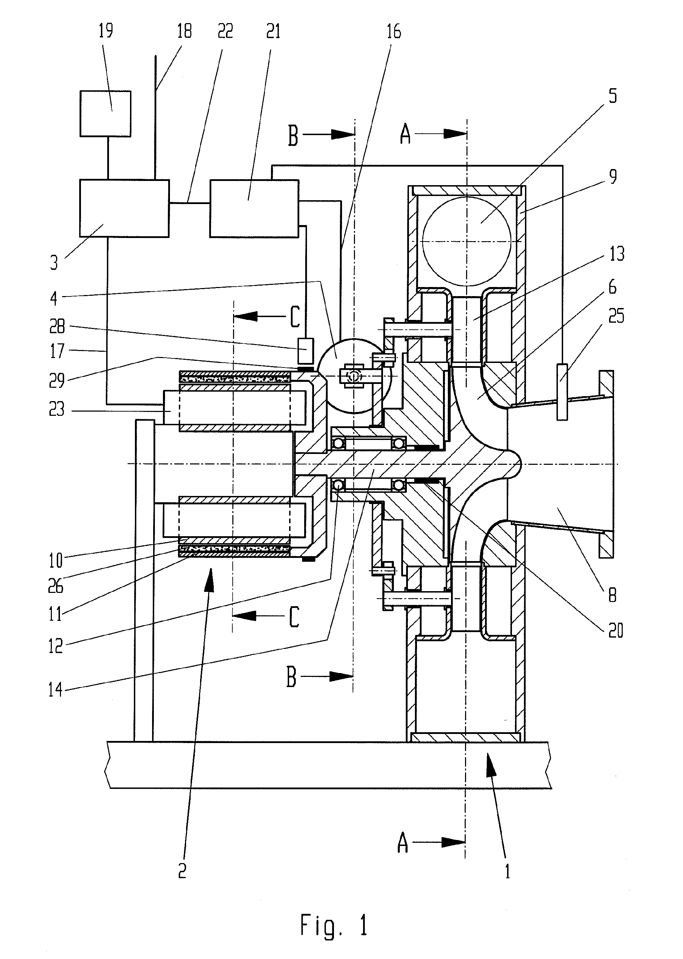

Die in Figur 1 als Ganzes dargestellte Anlage zur Erzeugung von elektrischer Energie aus einem veränderlichen Wasserdurchfluss und einem veränderlichen Wasserdruck umfasst als wesentliche Baugruppen eine Turbine 1, einen Generator 2 und eine Leistungselektronik 3. Die Turbine ist in der Bauart einer Francisturbine mit verstellbaren Leitschaufeln 13 ausgebildet, wobei die Leitschaufeln im vorliegenden Ausführungsbeispiel mit einem Servomotor 4 verstellt werden können. Der Servomotor 4 wirkt gemäss dem vorliegenden Ausführungsbeispiel mittels einer Verstellscheibe 15 und einer Spindel 24 auf die Leitschaufeln 13 ein. Die Leitschaufeln 13 werden also im vorliegenden Ausführungsbeispiel kohärent verstellt.

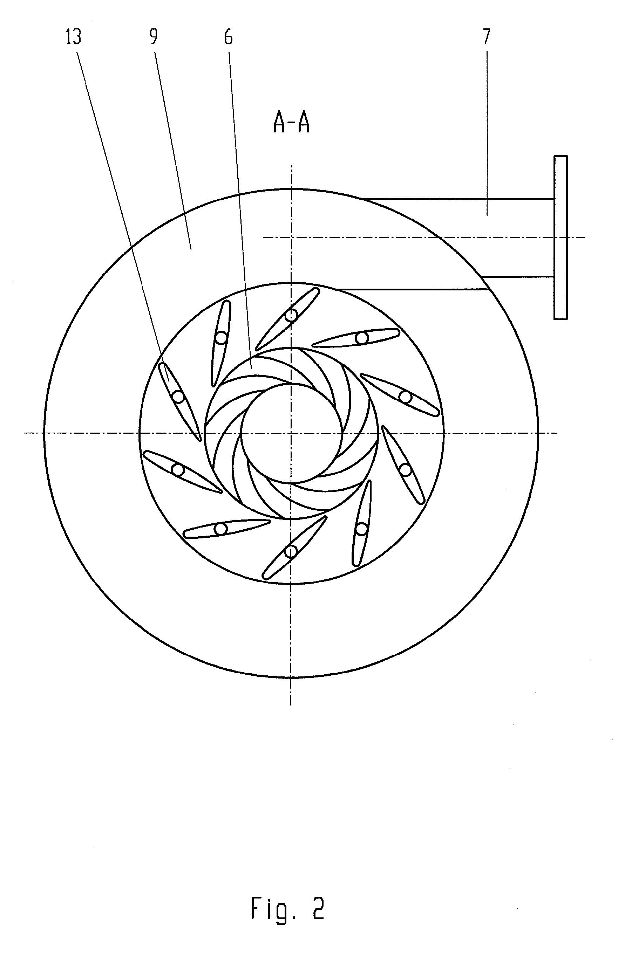

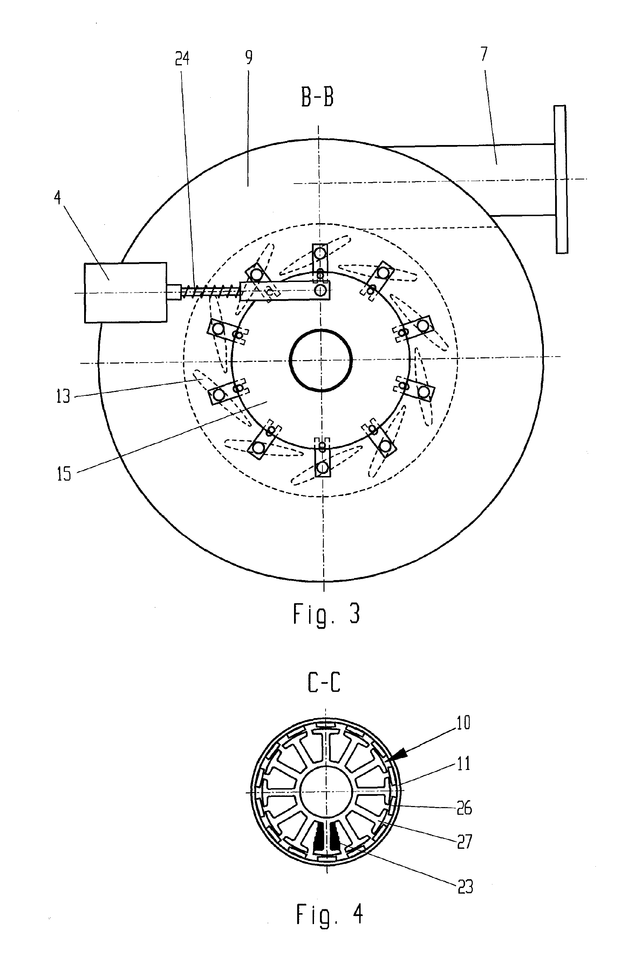

Das Wasser, dessen Energie genutzt werden soll, wird der im Gehäuse 9 untergebrachten Turbine 1 mittels eines Einlaufgehäuses 5 über einen in Figur 2 und 3 gezeigten Eingangsstuten 7 dem Turbinenrad 6 zugeführt und mittels eines Ausgangsstutzens wieder abgeführt und für die weitere Verwendung bereit gestellt.

Der Generator 2 umfasst im vorliegenden Ausführungsbeispiel einen Stator 10 mit 12 Generatorspulen 23, die auf den Statorzähnen 27 angeordnet sind, und einen Rotor 11 mit 14 Permanentmagneten 26. Der Rotor 11 ist im vorliegenden Ausführungsbeispiel mit der Turbine 1 auf einer gemeinsamen Welle 14 mit einer Lagerung 12 angeordnet, was sich als besonders vorteilhaft herausgestellt hat.

In Figur 1 ist weiterhin die Steuerleitung 16 von der Regelelektronik 21 zum Servomotor 4, die 3-Phasenleitung 17 vom Stator 10 zur Leistungselektronik 3, eine Datenleitung 22, die die Regelelektronik mit der Leistungselektronik verbindet sowie der Netzanschluss 18, ausgehend von der Leistungselektronik 3 dargestellt. Im vorliegenden Ausführungsbeispiel wird der Ausgangswasserdruck im Ausgangsstutzen 8 mittels eines Drucksensors 25 gemessen und die gemessenen Werte werden der Regelungselektronik 21 zugeführt, damit der Ausgangswasserdruck als Regelgrösse - durch die abgegebene elektrische Leistung - im wesentlichen konstant gehalten zumindest aber begrenzt werden kann. Weiterhin ist die Regelelektronik 21 so ausgelegt, dass die Drehzahl des Rotors mittels der Stellung der Leitschaufeln konstant bzw. innerhalb eines nützlichen Bereichs im Kennfeld der Anlage gehalten werden kann.

Das vorliegende Ausführungsbeispiel zeichnet sich weiterhin durch einen Bremswiderstand 19 zum Abführen des Turbinendrehmoments aus, der mit der Leistungselektronik verbunden ist und insbesondere beim Hochfahren und Herunterfahren der Turbine 1 zum Einsatz kommen kann.

In Figur 1 ist ein magnetischer Impulsgeber 28 dargestellt, der mit einem Magnetband 29 mit 500 Magnetstellen zusammenwirkt und mit dem die Drehzahl gemessen werden kann.

Der Zusammenhang zwischen der Anzahl der Magnete am Rotor und der Zähne am Stator soll im Folgenden erläutert werden. Wenn am Rotor 14 Magnete ausgebildet sind, dann ergeben sich am Stator 12 Zähne gemäss der vorliegenden Erfindung. Die elektrische Drehfrequenz ist dann 14/2 = 7 mal höher als die Turbinendrehzahl. Wenn aber am Rotor 10 Magnete ausgebildet sind, dann ergeben z.B. sich am Stator 12 Zähne gemäss der vorliegenden Erfindung. Die elektrische Drehfrequenz ist dann 10/2 = 5 mal höher als die Turbinendrehzahl.

### Bezugszeichenliste

- 1: Turbine
- 2: Generator
- 3: Leistungselektronik
- 4: Servomotor
- 5: Einlaufgehäuse
- 6: Turbinenrad
- 7: Eingangsstutzen
- 8: Ausgangsstutzen
- 9: Gehäuse
- 10: Stator mit Generatorspulen
- 11: Rotor mit Magneten
- 12: Lagerung von Turbine und Generator
- 13: Leitschaufeln
- 14: Welle
- 15: Verstellscheibe für Leitschaufeln
- 16: Steuerleitung vom Regler zum Servomotor
- 17: 3-Phasen Leitung zur Leistungselektronik
- 18: Netzanschluss
- 19: Bremswiderstand
- 20: Dichtung
- 21: Regelelektronik
- 22: Datenleitung
- 23: Spulen
- 24: Spindel
- 25: Drucksensor
- 26: Permanentmagnet
- 27: Statorzähne
- 28: Impulsgeber
- 29: Magnetband

## Patentansprüche

1. Anlage zur Erzeugung von elektrischer Energie aus einem veränderlichen Wasserdurchfluss und einem veränderlichen Wasserdruck, mit
- einer Turbine (1) mit verstellbaren Leitschaufeln (13),
- einem Generator (2) mit einem Rotor (11) und einem Stator (10)
- und einer Regelungseinrichtung (21),
wobei der Rotor (11) des Generators (2) mit einer Vielzahl von Permanentmagneten (26) ausgebildet ist,
**dadurch gekennzeichnet, dass**
- der Stator (10) des Generators mit einer Vielzahl von Generatorspulen aufweisenden Statorzähnen (27) ausgebildet ist,
wobei die Zahl der Statorzähne (27) um 2 grösser oder kleiner ist als die Zahl der Permanentmagnete (26) und
- die Regelungseinrichtung (21) so eingerichtet ist, dass die Stellung der Leitschaufeln (13) und/oder die abzugebende elektrische Leistung in Abhängigkeit vom die abzugebende elektrische Leistung in Abhängigkeit vom Ausgangswasserdruck (25) und/oder von der Drehzahl des Rotors regelbar ist.

2. Anlage nach Anspruch 1, **dadurch gekennzeichnet, dass** die Turbine (1) und der Rotor (11) des Generators (2) auf einer gemeinsamen Welle (14) angeordnet ist.

3. Anlage nach einem der Ansprüche 1 oder 2, **gekennzeichnet durch** einen Drucksensor (25) zur Messung des Ausgangswasserdruckes der Turbine (1).

4. Anlage nach Anspruch 3, **dadurch gekennzeichnet, dass** die Regeleinrichtung so eingerichtet ist, dass mittels eines Stellmotors, vorzugsweise eines Servomotor (4) oder eines Schrittmotors, die Verstellung der Leitschaufeln (13) regelbar ist.

5. Anlage nach einem der Ansprüche 1 bis 4, **dadurch gekennzeichnet, dass** die Zahl der Statorzähne (27) und die Zahl der Permanentmagnete (26) so ausgewählt sind, dass die Drehfrequenz der erzeugten elektrischen Energie am Stator (10) um einen ganzzahligen Faktor höheren Wert einnimmt wie die Drehzahl des Generators.

6. Anlage nach einem der Ansprüche 1 bis 5, **gekennzeichnet durch** zumindest einen Bremswiderstand zum Abführen des Turbinendrehmomentes, insbesondere beim Hochfahren und Herunterfahren der Anlage.

7. Anlage nach einem der Ansprüche 1 bis 6, **dadurch gekennzeichnet, dass** die Regelungseinrichtung (21) so eingerichtet ist, dass die Stellung der Leitschaufeln (13) in Abhängigkeit von der Drehzahl des Rotors geregelt wird.

8. Anlage nach einem der Ansprüche 1 bis 7, **dadurch gekennzeichnet, dass** die Regelungseinrichtung (21) so eingerichtet ist, dass die abzugebende elektrische Leistung in Abhängigkeit vom Ausgangswasserdruck (25) geregelt wird.
